# EUROPÄISCHE PATENTSCHRIFT

(11) **EP 3 426 953 B1**
(45) Veröffentlichungstag und Bekanntmachung des Hinweises auf die Patenterteilung: **16.06.2021**
(21) Anmeldenummer: 16712282.9
(22) Anmeldetag: 11.03.2016
(51) Int. Cl.: F16K 1/00, F16K 1/44, F16K 31/04

(54) **VENTILBAUREIHE**
VALVE SERIES
SÉRIE DE SOUPAPES

(43) Veröffentlichungstag der Anmeldung: 16.01.2019
(73) Patentinhaber: Karl Dungs GmbH & Co.KG, 73660 Urbach (DE)
(72) Erfinder: LANG, Martin, 71397 Leutenbach (DE); BÖS, Benjamin, 73614 Schorndorf (DE); OBERMÖLLER, Nils, 73614 Schorndorf (DE)
(74) Vertreter: Rüger Abel Patentanwälte PartGmbB
(86) Internationale Anmeldenummer: PCT/EP2016/055368
(87) Internationale Veröffentlichungsnummer: WO 2017/153003

(56) Entgegenhaltungen:
- EP-A2- 1 992 854
- DE-A1- 2 911 949
- DE-A1-102009 012 405

## Beschreibung

Die Erfindung betrifft eine Ventilbaureihe, insbesondere eine Baureihe von Gasventilen, die unterschiedliche Baugrößen aufweisen.

Ventilbausätze und Ventilbaureihen sind prinzipiell bekannt. Exemplarisch wird auf die DE 20 2010 003 659 U1 verwiesen, die einen Ventilbausatz mit einer Vorrichtung zur Endlagenerkennung beschreibt. Alle Ventile der Ventilbaureihe mit unterschiedlichen Baugrößen werden dort mit identischen Leiterplatten bestückt.

Aus der DE 10 2005 058 846 A1 ist darüber hinaus ein Ventilbaukastensystem mit elektromagnetisch betätigtem Ventil bekannt. Es ist dort vorgesehen, ein einheitliches Spulensystem für verschiedene Ventile zu verwenden.

Weiterer relevanter Stand der Technik ist in der EP-A-1 992 854 und in der DE-A-29 11 949 gezeigt.

Darüber hinaus sind selbstschließende Motorstellventile bekannt, wie sie beispielsweise der DE 10 2009 012 405 A12 zu entnehmen sind. Der Motorstellantrieb weist einen Stellmotor auf, der über ein Untersetzungsgetriebe und ein biegeschlaffes Zugmittel auf das Ventilverschlussglied einwirkt. Eine Schließfeder spannt das Ventilverschlussglied in Schließrichtung vor, wobei die Schließfeder eine ausreichende Kraft aufbringen muss, um alle Reibmomente des Untersetzungsgetriebes und das Anroll- bzw. Rastmoment des Stellmotors zu überwinden, damit das Ventilverschlussglied im stromlosen Zustand des Antriebs sicher in Schließstellung fährt. Dieses Erfordernis ergibt sich insbesondere bei Gasventilen, die jedenfalls sicher schließen müssen. Die Stärke der Schließfeder hängt jedoch von der Ventilgröße und dem Ventilhub ab. Deswegen werden innerhalb einer Ventilbaureihe normalerweise unterschiedlich starke bzw. unterschiedlich große Ventilantriebe für unterschiedlich große Ventile bereitgestellt, was einen beträchtlichen technischen Aufwand darstellt.

Es ist Aufgabe der Erfindung, ein Konzept anzugeben, mit dem sich Ventile einer Ventilbaureihe mit verringertem technischem Aufwand bereitstellen lassen.

Diese Aufgabe wird mit der Ventilbaureihe nach Anspruch 1 gelöst:
Die erfindungsgemäße Ventilbaureihe umfasst verschiedene Ventiltypen unterschiedlicher Baugröße, wobei jeder Ventiltyp der Ventilserie ein linear bewegliches Ventilverschlussglied aufweist, dem ein Ventilsitz, eine Schließfeder und ein Ventilantrieb zugeordnet sind. Der Ventilantrieb aller Ventiltypen ist einheitlich ausgebildet und erbringt einen einheitlichen Maximalhub. Dementsprechend weisen die Ventilverschlussglieder der betreffenden Ventiltypen ebenfalls den gleichen einheitlichen Maximalhub, d.h. die gleiche Distanz zwischen Schließstellung und Offenstellung auf. Dies ist unabhängig von der Größe der Ventilverschlussglieder der beteiligten Ventiltypen. Ventiltypen geringerer Baugröße können nämlich Ventilverschlussglieder mit einem geringeren Durchmesser aufweisen, während Ventiltypen größerer Baugröße Ventilverschlussglieder mit größerem Durchmesser aufweisen können. Auch können unterschiedliche Ventiltypen der gleichen Baureihe Ventilverschlussglieder mit unterschiedlichen Formen (Teller, Kegel, Einfachsitz, Doppelsitz usw.) aufweisen.

In bevorzugter Weise sind die Ventilantriebe aller betreffenden Ventiltypen insgesamt einheitlich ausgebildet, d.h. auch untereinander austauschbar. Jedoch können sich die Schließfedern verschiedener Ventiltypen untereinander unterscheiden. Erfindungsgemäss bringen die Schließfedern in Schließstellung unterschiedliche Schließkräfte auf, d.h. dass sie die Ventilverschlussglieder mit unterschiedlichen Kräften gegen den Ventilsitz drücken. Erfindungsgemäss weisen die Schließfedern bei Offenstellung jedoch gleiche Schließkräfte auf. Somit haben zum Beispiel die Ventile kleinerer Baugröße eine steilere Kraft-Weg-Kennlinie und die Ventile größerer Baugröße eine flachere Kraft-Weg-Kennlinie. Damit kann erreicht werden, dass bei kleineren Ventilverschlussgliedern die beteiligten Dichtungen an dem Ventilverschlussglied nicht überlastet werden. Die Schließkraft ist aber jedenfalls so groß, dass im Ventilanrieb vorhandene Reib- und Rastmomente von der Schließfeder bei jedem Ventil der Baureihe sicher überwunden werden können. Die Gleichheit der Schließkraft in Offenstellung der Ventilverschlussglieder bei allen Ventiltypen stellt hingegen sicher, dass der einheitliche Antrieb in jedem Fall das erforderliche Haltemoment für das Ventilverschlussglied in Offenstellung aufbringen kann, ohne dass Modifikationen am Antrieb nötig wären. Alle Antriebe können die gleichen Schrittmotoren, die gleichen Ansteuerschaltungen, die gleichen Getriebe mit der gleichen Getriebeuntersetzung und die gleichen Anschlüsse aufweisen und somit untereinander vollkommen austauschbar sein. Darüber hinaus bewirkt die einheitliche Schließfederkraft in Offenstellung, dass die Ventilantriebe bei deren Abschalten in gleicher Weise in Schließrichtung beschleunigt werden und dadurch eine weitgehend gleichmäßige Schließgeschwindigkeit über Ventile verschiedener Baugrößen erreicht wird.

Der Ventilantrieb kann als Motor einen Schrittmotor aufweisen, der über ein Untersetzungsgetriebe und ein Zugmittel, wie beispielsweise eine Kette, mit dem Ventilverschlussglied verbunden ist. Die Ausbildung des Zugmittels als Kette oder anderweitiges biegeschlaffes Zugmittel hat den Vorzug, dass das Ventilverschlussglied beim Schließvorgang beim Aufsetzen auf den Ventilsitz antriebsmäßig von dem Motor und dem Getriebe entkoppelt wird, so dass das im Motor und Getriebe vorhandene Schwungmoment nicht auf das Ventilverschlussglied und/oder den Ventilsitz einwirken und somit auch nicht zerstörerisch wirken kann. Es sind jedoch auch andere Entkopplungsmittel anwendbar, wie beispielsweise ein Freigang oder Leergang, der ein Auslaufen des Motors gestattet.

Vorzugsweise weist der Ventilantrieb eine Ansteuerschaltung für den Schrittmotor sowie eine Dämpfungsschaltung für die Schnellschlussbewegung auf, wobei weiterhin vorzugsweise auch die Ansteuerschaltung und die Dämpfungsschaltung bei allen Ventiltypen der Baureihe gleich ausgebildet sind. So ist letztendlich auch keine elektronische oder programmtechnische Anpassung der Ventilantriebe an die unterschiedlichen Ventiltypen erforderlich, was nicht nur Logistikvorteile bietet, sondern auch die Fehlerhäufigkeit durch Vertauschung von Ventilantrieben im Feld, etwa beim Austausch der Ventilantriebe bei Ventilen unterschiedlicher Baugröße, wesentlich reduziert und somit die Wartung wesentlich vereinfacht.

Der Ventilantrieb weist vorzugsweise eine elektronische Dämpfungseinrichtung auf. Diese wird vorzugsweise durch einen kapazitiven Dämpfungsstromkreis gebildet. Der Motor des Ventilantriebs ist vorzugsweise ein permanent erregter Schrittmotor, der mit dem kapazitiven Dämpfungsstromkreis eine Resonanzanordnung bildet. Der steile Anstieg der beim Schließen des Ventils im Generatorbetrieb des Schrittmotors im so gebildeten Resonanzkreis angefachten Ströme bei Annäherung an die Resonanzfrequenz führt zu einem nichtlinearen Hemm- bzw. Dämpfungsverhalten, so dass eine weitgehend einheitliche Schließgeschwindigkeit der Ventile beim automatischen Absperren sichergestellt werden kann, wobei die Schließgeschwindigkeit nur wenig von der Kraft der Schließfeder abhängt. Damit haben die Ventiltypen der Ventilbaureihe eine weitgehend gleiche Schließgeschwindigkeit.

Das erfindungsgemäße Verfahren zur Bereitstellung einer Ventilserie gemäss Anspruch 9 beruht ebenfalls auf dem Gedanken der Nutzung einheitlicher Ventilantriebe für Ventiltypen unterschiedlicher Baugröße. Vorzugsweise werden die Ventilantriebe für alle Ventiltypen einer Baureihe ventiltypunspezifisch bereitgestellt, so dass sich Ventile verschiedener Ventiltypen innerhalb der Baureihe antriebsseitig nur durch die Steilheit der Kennlinie der Ventilfedern unterscheiden. Die Ventilhübe sind innerhalb der Baureihe einheitlich. Die Ventiltellerdurchmesser verschiedener Ventiltypen der Baureihe sind vorzugsweise alle unterschiedlich, während die Ventilhübe vorzugsweise alle gleich sind.

Einzelheiten verschiedener Ausführungsformen der Erfindung sind Gegenstand von Unteransprüchen, der Zeichnung sowie von der Beschreibung. Es zeigen:
Figur 1 bis 3 verschiedene Ventiltypen A, B, C auch unterschiedlicher Baugröße, in schematischer Schnittdarstellung,
Figur 4 Kennlinien von Schließfedern unterschiedlicher Ventiltypen der Baureihe,
Figur 5 den Ventilantrieb, in einer schematisch funktionalen Blockdarstellung und
Figur 6 einen Flansch eines normübergreifend einsetzbaren Ventils.

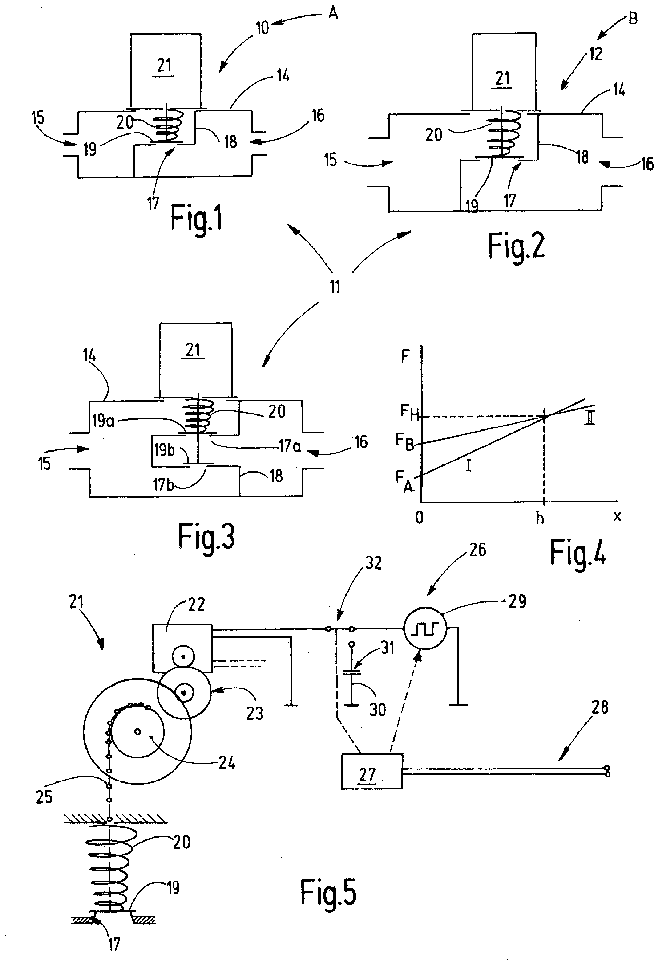

In Figur 1 ist ein Ventil 10 veranschaulicht, das einen ersten Ventiltyp A vertritt und zu einer sich über die Figuren 1, 2 und 3 erstreckenden Ventilbaureihe 11 gehört. Die Figuren 2 und 3 veranschaulichen Ventile 12, 13, die weitere Ventiltypen B, C der Ventilbaureihe 11 verkörpern.

Die Baureihe 11 umfasst mindestens zwei, vorzugsweise aber mehrere Ventiltypen A, B gleicher Bauart. Die Baureihe kann auch einen weiteren Ventiltyp C umfassen, oder auch mehrere davon. Die Ventiltypen A, B, C können sich in vielerlei Hinsicht unterscheiden. Beispielsweise haben sie unterschiedliche Nenndurchflüsse aufweisen, wie ein Vergleich der Ventile 10, 12 bzw. der Ventiltypen A und B zeigt. Es ist auch möglich, dass die Baureihe 11 mehrere Ventile mit gleichem Nenndurchflüssen, aber unterschiedlichen Anschlussflanschen aufweist.

Jedes Ventil 10, 12, 13 der Baureihe 11 umfasst ein Ventilgehäuse 14 mit einem Eingangsanschluss 15 und einem Ausgangsanschluss 16. Die Ventile 10, 12, 13 können sich hinsichtlich der Weite der Ein- und Ausgangsanschlüsse 15, 16 sowie auch hinsichtlich der Art der Ausbildung dieser Anschlüsse unterscheiden. Die Ventilbaureihe 11 kann zum Beispiel auch Ventiltypen gleichen Nenndurchflusses, jedoch unterschiedlicher Flanscharten (Rohrflansch, Schraubanschluss, usw.) aufweisen. Insbesondere aber können die Ventilgehäuse 14 unterschiedlich groß sein und sonstige Unterschiede, insbesondere unterschiedliche Nenndurchmesser (1/4 Zoll, ½ Zoll, 1 Zoll, 1½ Zoll und insbesondere mehrere Zoll) aufweisen.

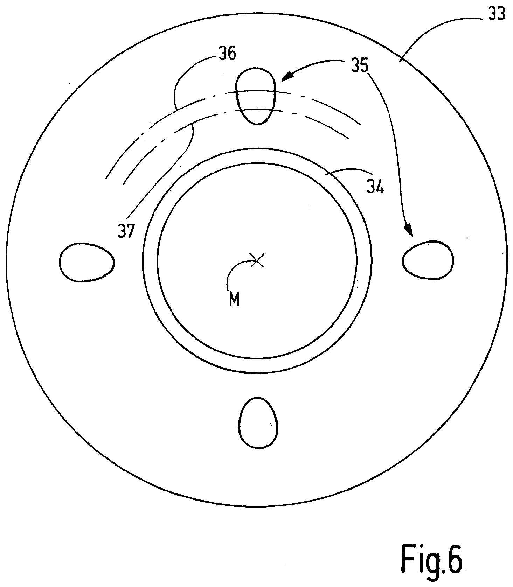

Weiter ist es möglich, Die Ventilgehäuse mindestens eines der Ventiltypen (z.B. Ventiltyp A), mehrerer Ventiltypen (A, B) oder aller Ventiltypen (A, B und weitere, sowie gegebenenfalls C) mit Flanschen 33 zu versehen, die in wenigstens zwei Normensysteme passen. Ein solcher (Universal-)Flansch 33 ist in Figur 6 gesondert veranschaulicht. Er wird durch einen scheibenförmigen Abschnitt des Ventilgehäuses 14 gebildet und weist eine bspw. plane Dichtfläche 34 auf. Um diese herum sind auf einem zu ihr konzentrischen Kreis Löcher 35 angeordnet (z.B. 4, 8 oder eine andere normübliche Anzahl). Die Befestigungslöcher sind vorzugsweise nicht kreisförmig. Sie weisen vielmehr ein erstes (z.B. radial äußeres) Ende mit einem größeren Durchmesser und ein zweites (z.B. radial inneres Ende) mit einem kleineren Durchmesser auf, so dass sich insgesamt eine Ei-Form ergibt. Es sind auch gleiche Durchmesser möglich, so dass sich für die Löcher 35 jeweils eine Ovalform ergibt. Die beiden Zentren der beiden Enden liegen auf unterschiedlichen zu dem Mittelpunkt M konzentrischen Lochkreisen 36, 37 und vorzugsweise außerdem auf durch den Mittelpunkt M gehenden Radialen. Der erste Lochkreis 36 und der erste Lochdurchmesser können einer ersten Norm entsprechen, während der zweite Lochkreis 37 und der zweite Lochdurchmesser einer zweiten Norm entsprechen. Die Flanken der Löcher können gerade oder, bei größerem Durchmesserunterschied der Lochkreisdurchmesser, auch gekrümmt (nach innen vorstehend) ausgebildet sein, so dass sich 8-förmige Löcher ergeben.

Jedes Ventilgehäuse 14 enthält mindestens einen Ventilsitz 17 in Gestalt eines vorzugsweisen runden Durchgangs in einer Trennwand 18, wobei, wie Figur 3 zeigt, auch mehrere Ventilsitze 17a, 17b, gleicher oder unterschiedlicher Größe vorgesehen sein können, die vorzugsweise konzentrisch zueinander angeordnet sind. Den Ventilsitzen 17, 17a, 17b sind Ventilverschlussglieder 19, 19a, 19b zugeordnet, die in Schließstellung auf dem jeweils zugeordneten Ventilsitz 17, 17a, 17b ruhen. Die Ventilverschlussglieder 19, 19a, 19b können gegen die Kraft einer Schließfeder 20 von dem jeweiligen Ventilsitz 17, 17a, 17b weg bewegt werden. Dazu dient ein Ventilantrieb 21, der in Struktur und Dimensionierung und vorzugsweise in allen Einzelheiten für die Ventile 10, 12, 13 der Ventilbaureihe 11 identisch ausgebildet ist. Somit kann der Ventilantrieb 21 zum Beispiel des ersten Ventils 10 ohne anpassende Maßnahme auf das Ventil 12 oder 13 montiert werden und umgekehrt.

Die Ventilverschlussglieder 19, 19a, 19b der verschiedenen Ventiltypen A, B, C können unterschiedliche Strukturen und Durchmesser aufweisen. Beispielsweise können sie unterschiedliche Dichtungsanordnungen oder auch grundlegend unterschiedlichen Aufbau haben, wie ein Vergleich der Ventiltypen A, B einerseits mit dem Ventiltyp C andererseits zeigt. Es kann sich bei den Ventiltypen somit um Einfachventile oder um Doppelsitzventile mit oder ohne Kraftausgleich handeln. Ein Kraftausgleich ist bei dem Ventiltyp C dadurch gegeben, dass das Ventilverschlussglied 19a bezüglich der Gasdurchströmungsrichtung vor dem Ventilsitz 17a und das Ventilverschlussglied 19b hinter dem Ventilsitz 17b sitzt. Der auf den Ventilverschlussgliedern 19a, 19b lastende Gasdruck erzeugt somit an den Ventilverschlussgliedern 19a, 19b entgegengesetzt gerichtete Kräfte, die sich im Wesentlichen aufheben. Anders ist dies bei den Ventiltypen A und B. Dort trägt der eingangsseitig anliegende Gasdruck zur Schließkraft der Schließfeder 20 bei.

Entsprechend der unterschiedlichen Größe und/oder unterschiedlichen Funktion der Ventile 10, 12, 13 der Ventiltypen A, B, C können die Schließfedern 20 unterschiedlich gestaltet sein. Sie sind jedoch alle auf den gleichen Ventilhub bemessen, d.h. diejenige Strecke, die das Ventilverschlussglied 19 von seiner Schließstellung, in der es auf dem Ventilsitz 17 aufsitzt, in seine Offenstellung zurücklegt. Figur 4 veranschaulicht beispielhaft eine erste Kennlinie I für den Ventiltyp A und eine zweite Kraft-Weg-Kennlinie II für die Schließfeder 20 des zweiten Ventiltyps B. Die Schließstellung des Ventilverschlussglieds 19 ist auf der X-Achse des Diagramms nach Figur 4 in der Position "0" zu finden. Die von der Schließfeder 20 des Ventils 10 aufgebrachte Schließkraft FA ist geringer als die Schließkraft FB der Schließfeder 20 des zweiten Ventils 12. Der Schließkraftunterschied kann dem Flächenunterschied der Ventilsitze 17 der beiden Ventile 10 und 12 entsprechen.

Die Kraft-Weg-Kennlinien I und II haben vorzugsweise unterschiedliche Anstiege, wobei der Anstieg der Kraft-Weg-Kennlinie I der Schließfeder 20 des kleineren Ventils 10 vorzugsweise steiler ist als der Anstieg der Kraft-Weg-Kennlinie der Schließfeder 20 des größeren Ventils 12. Die Anstiege sind vorzugsweise so bemessen, dass die Kraft FH der beiden Schließfedern 20 der beiden unterschiedlichen Ventile 10 und 12 in Offenstellung gleich ist. Die Offenstellung ist diejenige X-Position h des Ventilverschlussglieds 19, bei der dieses dem Maximalhub durchlaufen hat und in Offenstellung steht. Die Ventile aller Typen A, B, C weisen möglicherweise unterschiedlich ausgebildete Ventilverschlussglieder 19, 19, 19b auf, die zwischen Schließstellung und Offenstellung jedoch den gleichen Hub h durchlaufen.

Der einheitlich ausgebildete Ventilantrieb 21 ist in Figur 5 gesondert veranschaulicht. Zu ihm gehört insbesondere ein Elektromotor 22, der vorzugswese als permanent erregter Schrittmotor ausgebildet ist. Der Schrittmotor 22 treibt mit seiner Antriebswelle ein Untersetzungsgetriebe 23 an, das vorzugsweise als Stirnradgetriebe ausgebildet ist und keine Selbsthemmung aufweist. Das Untersetzungsgetriebe 23 ist mit einem Wickelrad, insbesondere einem Kettenrad 24 verbunden, das ein biegeschlaffes Zugmittel, im Falle eines Kettenrads eine Kette 25, durch Drehung auf- oder abwickeln kann. Dabei ist die Drehung des Wickelrads 25 vorzugsweise auf weniger als 360° beschränkt. Das Zugmittel, insbesondere die Kette 25, ist an einem Ende mit dem Wickelrad 24 verbunden. Mit dem anderen Ende ist die Kette 25 oder das sonstige Zugmittel mit dem Ventilverschlussglied 19 oder einer mit diesem verbundenen Ventilspindel verbunden, um das Ventilverschlussglied 19 gegen die Kraft der Schließfeder 20 von dem Ventilsitz 17 wegzuziehen, wenn der Ventilantrieb 21 aktiviert wird.

Der Schrittmotor 27 ist vorzugsweise wenigstens 2-phasig ausgebildet. Figur 5 veranschaulicht die Ansteuerschalung bezüglich einer Phase. Die Ansteuerschaltung für die zweite Phase des Schrittmotors ist entsprechend ausgebildet, in Figur 5 jedoch nicht weiter dargestellt.

Zu der Ansteuerschaltung 26 gehört eine Steuereinrichtung 27, die eine von den Eingangsanschlüssen 28 des Ventilantriebs 21 herrührende Gleich- oder Wechselspannung (zum Beispiel 24 V Steuerspannung oder 230 V Steuerspannung) in Ansteuerimpulse für den Schrittmotor 22 umsetzt. Eine entsprechende Wechselrichterschaltung 29 ist in Figur 5 lediglich schematisch als Quelle veranschaulicht. Typischerweise regelt diese den Strom quasi-sinusförmiger aus, sodass ein runder Lauf des Motors ohne störende Schwingungen durch harte Schritte ermöglicht wird. Man spricht dann von sogenanntem Mikroschrittbetrieb, mit typ. 16 und bis zu 256 Abtastpunkten je Viertelwelle.

Zu der Ansteuerschaltung 26 gehört auch ein Dämpfungsstromkreis 30, der mindestens einen Kondensator 31 enthält. Ein Umschalter 32 ist dafür vorgesehen, die Wicklung des Schrittmotors 22 alternativ mit der Wechselrichterschaltung 29 oder dem Bremsstromreis 30 zu verbinden. Der Umschalter 32 wird von der Steuerschaltung 27 gesteuert. Er kann als Umschaltrelais oder als elektronischer Schalter ausgebildet sein.

Die erfindungsgemäße Ventilbaureihe 11 umfasst unterschiedlich ausgebildete Ventile 10, 12, 13 mit einheitlichen Ventilantrieben 21. Die Bereitstellung der Ventile 10, 12, 13 der Ventilbaureihe 11 umfasst somit die Bereitstellung unterschiedlicher Ventilgehäuse 14 mit den entsprechend darin vorhandenen Ventilverschlussgliedern 19, 19a, 19b und deren zugeordneten Schließfedern 20. Die bis dahin bereitgestellten Ventilgehäuse und Ventilverschlussglieder und Ventilfedern sind typisch spezifisch für den Ventiltyp A, Ventiltyp B oder Ventiltyp C. Für alle Ventiltypen A, B, C wird jedoch nur ein einziger Antriebstyp in Gestalt der Ventilantriebe 21 bereitgestellt, der keinerlei Individualisierung erfährt.

In Ruhestellung sitzt das Ventilverschlussglied infolge der von der Schließfeder 20 ausgeübten Kraft auf dem Ventilsitz 17. Wird der Ventilantrieb 21 nun an seinem Anschluss 28 mit Spannung versorgt, wird die Wechselrichterschaltung 29 aktiviert. Zugleich steht der Umschalter 32 in der in Figur 5 veranschaulichten Position, in der er den Schrittmotor 22 mit der Wechselrichterschaltung 29 verbindet. Der Schrittmotor 22 läuft nun in Offenstellung und hält dort an. Dies kann durch Zählen der von dem Wechselrichter 29 abgegebenen Schrittimpulse oder durch Positionssensoren kontrolliert werden, die an dem Ventilantrieb 21 und/oder an anderer Stelle des Ventils 10, 12 oder 13 angebracht sind.

Soll das Ventil 10, 12 oder 13 schließen, wird der Anschluss 28 spannungslos geschaltet. In diesem Fall wird auch der Umschalter 32 die Verbindung zwischen der Wechselrichterschaltung 29 und dem Schrittmotor 22 trennen und letzteren dafür mit dem Dämpfungsstromkreis 30 verbinden. Ist der Umschalter 32 als Relais ausgebildet, wird das Relais stromlos und der Umschalter 32 geht von der in Figur 5 veranschaulichten Arbeitsposition in seine Ruheposition, in der er den Dämpfungs-stromkreis mit dem Schrittmotor 22 verbindet.

In diesem Zustand treibt die Schließfeder 20 das Ventilverschlussglied 19 in Schließrichtung und dreht dabei den im Generatorbetreib arbeitenden Schrittmotor 22. Die an seinen Wicklungen entstehende Wechselspannung verursacht einen Strom durch den Kondensator 31. Dieser bildet mit der Spuleninduktivität des Schrittmotors 22 einen Resonanzkreis. Sobald die Frequenz des durch den Dämpfungsstromkreis fließenden Stroms sich der Resonanzfrequenz dieses Resonanzkreises annähert, entsteht ein zunehmendes Gegenmoment des Schrittmotors 22, so dass dieser mit zunehmender Drehzahl überproportional verzögert wird. Dadurch wird die Motordrehzahl begrenzt, so dass ein zügiges, jedoch nicht ungebremstes und erst recht nicht schlagartiges Schließen des Ventils 10, 12 oder 13 erfolgt. Durch die drehzahlstabilisierende Wirkung des Resonanzkreises spielt dabei der Abfall der Federkraft gemäß der Kraft-Weg-Kennlinie I bei kleineren Ventiltypen eine untergeordnete Rolle. Auch diese schließen zügig. Andererseits schließen Ventile mit stärkeren Federn zum Beispiel gemäß Kraft-Weg-Kennlinie II nicht übermäßig schnell. Die nichtlineare Bremswirkung des Resonanzkreises gleicht verschiedene Federkräfte aus, so dass die Drehzahlen der Schrittmotoren 22 gleicher Ventilantreibe bei unterschiedlichen Schließfedern in einem engen Toleranzband bleiben.

Die erfindungsgemäße Ventilserie umfasst mehrere Ventiltypen A, B, C mit Ventilen unterschiedlicher Baugröße, wobei mehrere, vorzugsweise alle Ventiltypen A, B, C der Ventilbaureihe 11 einheitliche Ventilantriebe 21 aufweisen, wobei die Ventilverschlussglieder 19 der Ventile 10, 12, 13 den gleichen Öffnungshub vollführen, wobei sie jedoch unterschiedlich ausgebildet sein können und insbesondere unterschiedliche Durchmesser aufweisen können. Auch können die Schließfedern 20 der verschiedenen Ventiltypen A, B, C unterschiedliche Kennlinien aufweisen und unterschiedlich stark sein.

**Bezugszeichen:**

| | |
|---|---|
| 10 | erstes Ventil |
| A | erster Ventiltyp |
| 11 | Ventilbaureihe |
| 12 | zweites Ventil |
| 13 | drittes Ventil |
| B, C | zweiter und dritter Ventiltyp |
| 14 | Ventilgehäuse |
| 15 | Eingangsanschluss |
| 16 | Ausgangsanschluss |
| 17, 17a, 17b | Ventilsitze |
| 18 | Trennwand |
| 19, 19a, 19b | Ventilverschlussglieder |
| 20 | Schließ feder |
| 21 | Ventilantrieb |
| I, II | Kraft-Weg-Kennlinien |
| F_{A} | Schließkraft der Schließfeder 20 des ersten Ventils 10 |
| F_{B} | Schließkraft der Schließfeder 20 des zweiten Ventils 12 |
| F_{H} | Kraft der Schließfedern 20 in Offenstellung |
| 22 | Schrittmotor |
| 23 | Untersetzungsgetriebe |
| 24 | Wickelrad |
| 25 | Kette/Biegeschlaffes Zugmittel |
| 26 | Ansteuerschaltung |
| 27 | Steuerschaltung |
| 28 | Anschluss |
| 29 | Wechselrichterschaltung |
| 30 | Dämpfungsstromkreis |
| 31 | Kondensator |
| 32 | Umschalter |
| 33 | Flansch |
| 34 | Dichtungsfläche |
| 35 | Löcher |
| 36 | erster Lochkreis |
| 37 | zweiter Lochkreis |

## Patentansprüche

1. Ventilserie (11) umfassend mehrere Ventiltypen (A, B, C) unterschiedlicher Baugröße,
wobei jeder Ventiltyp (A, B, C) der Ventilserie (11) ein linear bewegliches Ventilverschlussglied (19) aufweist, dem ein Ventilsitz (17), eine Schließfeder (20) und ein Ventilantrieb (21) zugeordnet sind,
wobei der Ventilantrieb (21) aller Ventiltypen (A, B, C) einheitlich ausgebildet ist und einen einheitlichen Maximalhub (h) erbringt,
wobei wenigstens zwei Ventiltypen (A, B, ...) vorhanden sind, deren Schließfedern (20) eine unterschiedliche Kennlinie (I, II) aufweisen,
wobei die unterschiedlichen Schließfedern (20) bei auf den Ventilsitzen (17) aufsitzenden Ventilverschlussgliedern (19) unterschiedliche Schließkräfte (F_{A},F_{B}) aufbringend ausgebildet sind und
wobei die unterschiedlichen Schließfedern (20) bei in Offenstellung stehenden Ventilverschlussgliedern (19) gleiche Schließkräfte (F_{H}) aufbringend ausgebildet sind.

2. Ventilserie nach Anspruch 1 , **dadurch gekennzeichnet, dass** die Schließfedern (20) der Ventiltypen (A) mit kleinerem Ventilsitzdurchmesser eine steilere Kraft-Weg-Kennlinie (I) aufweisen als die Schließfedern (20) der Ventiltypen (B) mit größerem Ventilsitzdurchmesser und/oder
dass die Schließfedern (20) von Ventiltypen (A) mit einfachem Ventilsitz (17) eine steilere Kraft-Weg-Kennlinie (I) aufweisen als die Schließfedern (20) von Ventiltypen (C) mit doppeltem Ventilsitz (17a, 17b).

3. Ventilserie nach einem der vorstehenden Ansprüche,
**dadurch gekennzeichnet, dass** der einheitliche Ventilantrieb (21) eine Selbsthemmung aufbringt, die geringer ist, als die Schließkraft der Schließfeder (20) jedes Ventiltyps (A, B, C) der Ventilbaureihe (11).

4. Ventilserie nach Anspruch 3, **dadurch gekennzeichnet, dass** die Selbsthemmung geringer ist, als die Schließkraft der Schließfeder (20) bei geschlossenem Ventil.

5. Ventilserie nach einem der vorstehenden Ansprüche,
**dadurch gekennzeichnet, dass** der Ventilantrieb (21) einen Schrittmotor (22) aufweist, der über ein Untersetzungsgetriebe (23) und ein Zugmittel (25) direkt oder indirekt mit dem Ventilverschlussglied (19) verbunden ist.

6. Ventilserie nach Anspruch 5,
**dadurch gekennzeichnet, dass** dem Schrittmotor (22) des Ventilantriebs (21) eine Steuereinrichtung (27) zugeordnet ist, die eine elektrische Dämpfungsschaltung (30) aufweist.

7. Ventilserie nach Anspruch 6, **dadurch gekennzeichnet, dass** die elektrische Dämpfungsschaltung (31) der Ventilantriebe (21) aller Ventiltypen (A, B, C) gleich dimensioniert ist.

8. Ventilserie nach Anspruch 6 oder 7, **dadurch gekennzeichnet, dass** die elektrische Dämpfungsschaltung (31) wenigstens einen kapazitiven Bremsstromkreis aufweist.

9. Verfahren zur Bereitstellung einer Ventilserie mit mehreren Ventiltypen (A, B, C) unterschiedlicher Baugröße, mit folgenden Schritten:
Bereitstellung von Ventilen (10, 12, 13) unterschiedlichen Typs (A, B, C), wobei jedes Ventil der Ventilserie ein linear bewegliches Ventilverschlussglied (19) und einen Ventilsitz (17) aufweist,
Bereitstellung von Schließfedern (20) mit ventiltypspezifisch unterschiedlichen Kennlinien (I, II), so dass sich die Schließfedern (20) von wenigstens zwei Ventiltypen (A, B) der Baureihe unterscheiden, wobei die unterschiedlichen Schließfedern (20) bei auf den Ventilsitzen (17) aufsitzenden Ventilverschlussgliedern (19) unterschiedliche Schließkräfte (F_{A},F_{B}) und bei in Offenstellung stehenden Ventilverschlussgliedern (1) gleiche Schließkräfte (F_{H}) aufbringen,
Bereitstellung von einheitlichen Ventilantrieben (21) mit einheitlichem Maximalhub (h),
Zusammenfügung der Ventile (10, 12, 13), Schließfedern (20) und Ventilantriebe (21).

10. Verfahren nach Anspruch 9, **dadurch gekennzeichnet, dass** die Ventilantriebe (21) ventiltypunspezifisch bereitgestellt werden.

11. Verfahren nach einem der Ansprüche 9 oder 10, **dadurch gekennzeichnet, dass** die Ventilantriebe Dämpfungsschaltungen (31, 32) zur Dämpfung der Schließbewegung enthalten, die ventiltypunspezifisch bereitgestellt werden.

## Claims

1. Valve series (11) comprising multiple valve types (A, B, C) with valves of different sizes;
- wherein each valve type (A, B, C) of the valve series (11) has a linearly movable valve closing member (19), to which a valve seat (17), a closing spring (20) and a valve drive (21) are assigned,
- wherein the valve drive (21) of all valve types (A, B, C) is formed uniformly and provides a uniform maximum lift (h),
- wherein at least two valve types (A, B, ...) are present, the closing springs (20) of which have a different characteristic curve (I, II),
- wherein the different closing springs (20) are configured to exert different closing forces (F_{A}, F_{B}) when the valve closing members (19) are seated on the valve seats (17), and
- wherein the different closing springs (20) are configured to exert the same closing forces (F_{H}) when the valve closing members (19) are in the open position.

2. Valve series according to claim 1, **characterised in that** the closing springs (20) of valve types (A) with a smaller valve seat diameter have a steeper force-travel curve (I) than the closing springs (20) of the valve types (B) with larger valve seat diameter, and/or
that the closing springs (20) of valve types (A) with a single valve seat (17) have a steeper force-travel curve (I) than the closing springs (20) of valve types (C) with a double valve seat (17a, 17b).

3. Valve series according to one of the preceding claims, **characterised in that** the uniform valve drive (21) applies a self-locking force which is smaller than the closing force of the closing spring (20) of each valve type (A, B, C) of the valve series (11).

4. Valve series according to claim 3, **characterised in that** the self-locking force is smaller than the closing force of the closing spring (20) when the valve is closed.

5. Valve series according to any of the preceding claims, **characterised in that** the valve drive (21) has a stepper motor (22) which is connected to the valve closing member (19) directly or indirectly via a reduction gearing (23) and a tension means (25).

6. Valve series according to claim 5, **characterised in that** a control unit (27) having an electric damping circuit (30) is assigned to the stepper motor (22) of the valve drive (21).

7. Valve series according to claim 6, **characterised in that** the electric damping circuits (31) of the valve drives (21) of all valve types (A, B, C) have the same dimensions.

8. Valve series according to claim 6 or 7, **characterised in that** the electric damping circuit (31) comprises at least one capacitative brake current circuit.

9. Method for providing a valve series with several valve types (A, B, C) of different sizes, with the following steps:
- provision of valves (10, 12, 13) of different types (A, B, C), wherein each valve of the valve series has a linearly movable valve closing member (19) and a valve seat (17),
- provision of closing springs (20) with different valve-type-specific characteristic curves (I, II), so that the closing springs (20) of at least two valve types (A, B) of the series differ, wherein the different closing springs (20) exert different closing forces (F_{A}, F_{B}) when the valve closing members (19) are seated on the valve seats (17) and exert the same closing forces (F_{H}) when the valve closing members (19) are in the open position,
- provision of uniform valve drives (21) with uniform maximum lift (h),
- combination of the valves (10, 12, 13) closing springs (20) and valve drives (21).

10. Method according to claim 9, **characterised in that** the valve drives (21) are not valve-type-specific.

11. Method according to one of claims 9 or 10, **characterised in that** the valve drives contain damping circuits (31, 32) for damping the closing movement which are not valve-type-specific.

## Revendications

1. Série de soupapes (11) comprenant plusieurs types de soupapes (A, B, C) de dimensions différentes,
chaque type de soupape (A, B, C) de la série de soupapes (11) présentant un élément obturateur de soupape (19) qui est déplaçable de façon linéaire et auquel sont associés un siège de soupape (17), un ressort de fermeture (20) et une commande de soupape (21),
la commande de soupape (21) de tous les types de soupapes (A, B, C) étant réalisée de manière uniforme et produisant une course maximale (h) uniforme,
au moins deux types de soupapes (A, B, ...) étant présents, dont les ressorts de fermeture (20) ont une courbe caractéristique (I, II) différente,
les différents ressorts de fermeture (20) étant réalisés de manière à produire des forces de fermeture (F_{A}, F_{B}) différentes lorsque les éléments obturateurs de soupape (19) sont en appui sur les sièges de soupape (17), et
les différents ressorts de fermeture (20) étant réalisés de manière à produire des forces de fermeture (F_{H}) identiques lorsque les éléments obturateurs de soupape (19) sont en position ouverte.

2. Série de soupapes selon la revendication 1, **caractérisée en ce que** les ressorts de fermeture (20) des types de soupapes (A) de plus petit diamètre de siège de soupape présentent une caractéristique force/course (I) plus raide que les ressorts de fermeture (20) des types de soupapes (B) de plus grand diamètre de siège de soupape et/ou **en ce que** les ressorts de fermeture (20) de types de soupapes (A) à siège de soupape (17) simple présentent une caractéristique force/course (I) plus raide que les ressorts de fermeture (20) des types de soupapes (C) à double siège de soupape (17a, 17b).

3. Série de soupapes selon l'une des revendications précédentes, **caractérisée en ce que** la commande de soupape (21) uniforme produit un blocage automatique qui est plus faible que la force de fermeture du ressort de fermeture (20) de chaque type de soupape (A, B, C) de la série de soupapes (11).

4. Série de soupapes selon la revendication 3, **caractérisée en ce que** le blocage automatique est plus faible que la force de fermeture du ressort de fermeture (20) lorsque la soupape est fermée.

5. Série de soupapes selon l'une des revendications précédentes, **caractérisée en ce que** la commande de soupape (21) présente un moteur pas à pas (22) qui est relié directement ou indirectement à l'élément obturateur de soupape (19), par l'intermédiaire d'un mécanisme réducteur (23) et d'un moyen de traction (25).

6. Série de soupapes selon la revendication 5, **caractérisée en ce qu'**un dispositif de commande (27) est associé au moteur pas à pas (22) de la commande de soupape (21), qui présente un circuit d'amortissement (30) électrique.

7. Série de soupapes selon la revendication 6, **caractérisée en ce que** le circuit d'amortissement (31) électrique des commandes de soupape (21) de tous les types de soupapes (A, B, C) présente le même dimensionnement.

8. Série de soupapes selon la revendication 6 ou 7, **caractérisée en ce que** le circuit d'amortissement (31) électrique présente au moins un circuit de courant de freinage capacitif.

9. Procédé de préparation d'une série de soupapes comportant plusieurs types de soupapes (A, B, C) de dimensions différentes, comprenant les étapes suivantes :
préparation de soupapes (10, 12, 13) de différents types (A, B, C), où chaque soupape de la série de soupapes présente un élément obturateur de soupape (19) à déplacement linéaire et un siège de soupape (17),
préparation de ressorts de fermeture (20) présentant des courbes caractéristiques (I, II) différentes, spécifiques aux types de soupapes, de sorte que les ressorts de fermeture (20) d'au moins deux types de soupapes (A, B) de la série soient différents, les différents ressorts de fermeture (20) produisant des forces de fermeture (F_{A}, F_{B}) différentes lorsque les éléments obturateurs de soupape (19) sont en appui sur les sièges de soupape (17), et produisant des forces de fermeture (F_{H}) identiques lorsque les éléments obturateurs de soupape (19) sont en position ouverte,
préparation de commandes de soupapes (21) uniformes présentant une course maximale (h) uniforme,
assemblage des soupapes (10, 12, 13), des ressorts de fermeture (20) et des commandes de soupapes (21).

10. Procédé selon la revendication 9, **caractérisé en ce que** les commandes de soupapes (21) sont préparées sans spécificité à un type de soupape.

11. Procédé selon l'une des revendications 9 ou 10, **caractérisé en ce que** les commandes de soupapes comportent des circuits amortisseurs (31, 32) qui sont destinés à l'amortissement du mouvement de fermeture et sont fournis sans spécificité à un type de soupape.
